# EUROPÄISCHE PATENTANMELDUNG

(11) **EP 2 086 084 A1**
(43) Veröffentlichungstag der Anmeldung: **05.08.2009**
(21) Anmeldenummer: 08001635.5
(22) Anmeldetag: 29.01.2008
(51) Int. Cl.: H02J 1/00, B60R 16/03, H05B 33/08

(54) **LED-Bordnetz**

(71) Anmelder: Delphi Technologies, Inc., Troy, Michigan 48007 (US)
(72) Erfinder: Noll, Diethelm, 57589 Birkenbeul (DE); Hupertz, Stefan, 57462 Olpe (DE); Hornbach, Frank, 51674 Wiehl (DE)
(74) Vertreter: Manitz, Finsterwald & Partner GbR

(57) **Zusammenfassung**

Die Erfindung betrifft ein LED-Bordnetz zum Betrieb von Kfz-Leuchten mit Leuchtdioden, mit wenigstens einer LED-Spannungsversorgung, deren Nennspannung von der Nennspannung einer Starterbatterie eines Kraftfahrzeugs, insbesondere von 12V und/oder 24V, verschieden ist, und mit wenigstens zwei Treibereinrichtungen, die über Versorgungsleitungen mit der LED-Spannungsversorgung verbunden und jeweils zum Ansteuern einer eigenen Kfz-Leuchte ausgebildet sind.

## Beschreibung

Die vorliegende Erfindung betrifft ein LED-Bordnetz zum Betrieb von Kfz-Leuchten mit Leuchtdioden.

Vor allem in der Vergangenheit wurden Glühbirnen und Anzeigelampen für die verschiedenen Leuchten (d.h. Lichter oder Beleuchtungen) eines Kraftfahrzeugs verwendet, wie z.B. für Bremslichter, Rücklichter, Rückfahrlichter, Nebelschlusslichter, Blinklichter, Scheinwerfer, Nebelscheinwerfer, zusätzliche Konturenleuchten, Kennzeichenbeleuchtungen und Innenraumbeleuchtungen. Derartige Glühbirnen und Anzeigelampen besitzen den Vorteil, dass sie eine Betriebsspannung von 12V oder 24V besitzen, so dass sie ohne zusätzliche Vorschaltgeräte in einem Kraftfahrzeug eingesetzt werden können.

Heutzutage werden Glühbirnen und Anzeigelampen vermehrt durch Leuchtdioden (LEDs) ersetzt. LEDs arbeiten jedoch mit einer Betriebsspannung von üblicherweise ca. 2V bis 4V.

Zum Anschluss an das 12V oder 24V-Bordnetz eines Kraftfahrzeugs könnte eine LED daher mit einem in Reihe geschalteten Vorwiderstand versehen werden. Eine Schwankung der Bordspannung führt bei Verwendung eines Vorwiderstandes jedoch zu einer entsprechenden Helligkeitsschwankung der LED, deren Wert aufgrund der nichtlinearen I-U-Kennlinie einer LED gegenüber dem Wert der zugrunde liegenden Spannungsschwankung sogar noch verstärkt ist.

Um dies zu umgehen, ist es bekannt, die Bordspannung auf die Betriebsspannung der LED zu transformieren, wobei gleichzeitig über eine Stromregelung eine gleichmäßige Helligkeit der LED gewährleistet wird. Da dies für jede Leuchte eines Kraftfahrzeugs separat vorgenommen wird, ist ein hoher Aufwand an Elektronikbauteilen notwendig, welche zu erheblichen Mehrkosten führen.

Der Erfindung liegt die Aufgabe zugrunde, eine Möglichkeit anzugeben, die vorstehend im Zusammenhang mit der Verwendung von LEDs im Kraftfahrzeug genannten Nachteile zu vermeiden.

Diese Aufgabe wird durch ein LED-Bordnetz zum Betrieb von Kfz-Leuchten mit Leuchtdioden gelöst, wobei das LED-Bordnetz wenigstens eine LED-Spannungsversorgung, deren Nennspannung von der Nennspannung einer Starterbatterie eines Kraftfahrzeugs, insbesondere von 12V und/oder 24V, verschieden ist, und wenigstens zwei Treibereinrichtungen, die über Versorgungsleitungen mit der LED-Spannungsversorgung verbunden und jeweils zum Ansteuern einer eigenen Kfz-Leuchte ausgebildet sind, umfasst.

Es wird also ein zusätzliches Bordnetz eigens zum Betrieb der in dem Kraftfahrzeug verwendeten Leuchtdioden bereitgestellt. Das LED-Bordnetz umfasst eine eigene Spannungsversorgung. Die eigene Spannungsversorgung besitzt eine Nennspannung, die von der Nennspannung des herkömmlichen Bordnetzes des Kraftfahrzeugs verschieden und an die Betriebsspannung der in dem Kraftfahrzeug verwendeten Leuchtdioden angepasst ist.

Darüber hinaus sind wenigstens zwei Treibereinrichtungen vorgesehen, die über Versorgungsleitungen jeweils mit der LED-Spannungsversorgung verbunden sind. Über die Treibereinrichtungen können an das LED-Bordnetz angeschlossene Kfz-Leuchten angesteuert und mit der Nennspannung der LED-Spannungsversorgung versorgt werden. Die LED-Spannungsversorgung ist zum Betrieb von wenigstens zwei Kfz-Leuchten vorgesehen.

LED-Treiber, die insbesondere zur Stromregelung vorgesehen sind, sind dem Fachmann hinlänglich bekannt, so dass hierauf nachstehend nicht näher eingegangen zu werden braucht.

Erfindungsgemäß können mehrere, voneinander verschiedene LED-Leuchten eines Kraftfahrzeugs von einer gemeinsamen Spannungsversorgung versorgt werden, d.h. es ist nicht mehr notwendig, für jede der Kfz-Leuchten einen eigenen Spannungswandler vorzusehen. Hierdurch können Kosten reduziert werden.

Bei einer Kfz-Leuchte im Sinne dieser Anmeldung handelt es sich insbesondere um eine der eingangs genannten Leuchten. Eine Kfz-Leuchte kann eine oder mehrere Leuchtdioden aufweisen, wobei mehrere Leuchtdioden einer Kfz-Leuchte in Reihe und/oder parallel zueinander angeordnet sein können. Bei einer sogenannten Mehrkammerleuchte, die mehrere Funktionen bereitstellt, beispielsweise Nebelschlusslicht, Rückfahrlicht, Blinklicht, Schlusslicht und Bremslicht, stellt jede dieser Funktionen eine Kfz-Leuchte im Sinne dieser Anmeldung dar.

Bevorzugt ist für alle LED-Leuchten eines Kraftfahrzeugs eine einzige, zentrale LED-Spannungsversorgung vorgesehen, d.h. alle LED-Leuchten eines Kraftfahrzeugs sind an diese einzige LED-Spannungsversorgung angeschlossen. Grundsätzlich ist es jedoch auch möglich, dass mehrere LED-Spannungsversorgungen vorgesehen sind. Beispielsweise können jeweils eine gemeinsame LED-Spannungsversorgung für alle am Fahrzeugheck angeordneten LED-Leuchten und alle an der Fahrzeugfront angeordneten LED-Leuchten vorgesehen sein, oder jeweils eine gemeinsame Spannungsversorgung für das hintere, linke Fahrzeugheck, das hintere, rechte Fahrzeugheck, das vordere, linke Fahrzeugheck und das vordere, rechte Fahrzeugheck.

Es sind Kfz-Leuchten mit Leuchtdioden bekannt, bei denen jeweils mehrere Leuchtdioden in Reihe zueinander geschaltet sind, wobei auch mehrere dieser Reihen parallel zueinander geschaltet sein können. In diesem Fall kann die Nennspannung der LED-Spannungsversorgung höher sein als die Nennspannung einer Starterbatterie eines Kraftfahrzeugs. Soll mit der Nennspannung der LED-Spannungsversorgung jedoch eine nicht mit anderen Leuchtdioden in Reihe geschaltete Leuchtdiode beaufschlagt werden oder liegt eine Reihenschaltung von Leuchtdioden vor, deren Gesamtspannungsaufnahme kleiner ist, als die von einer Starterbatterie eines Kraftfahrzeugs bereitgestellte Nennspannung, ist es bevorzugt, wenn die Nennspannung der LED-Spannungsversorgung kleiner ist als die Nennspannung einer Startbatterie eines Kraftfahrzeugs. Die Nennspannung der LED-Spannungsversorgung kann beispielsweise 6V betragen.

Die LED-Spannungsversorgung kann als eine von einer Starterbatterie eines Kraftfahrzeugs unabhängige Spannungsversorgung ausgebildet sein. Insbesondere kann die LED-Spannungsversorgung als eine Batterie ausgebildet sein. Bevorzugt ist die LED-Spannungsversorgung jedoch als ein Spannungswandler, insbesondere ein Schaltregler ausgebildet, der einen Eingang zum Anschließen an eine Starterbatterie eines Kraftfahrzeugs umfasst. Insbesondere kann der Spannungswandler als ein Abwärtswandler ausgebildet sein, der eine Ausgangsspannung erzeugt, die niedriger ist als die Eingangsspannung. Bei der Spannungswandlung handelt es sich um eine Gleichspannungswandlung.

Nach einer Ausbildung der Erfindung ist wenigstens eine Steuereinrichtung zur Ansteuerung der Treibereinrichtungen vorgesehen. Die Steuereinrichtung kann ihrerseits mit einem Prozessor verbunden sein.

Vorzugsweise ist das LED-Bordnetz zur Übertragung von Daten auf den Versorgungsleitungen ausgelegt. Die Daten können zur insbesondere bi-direktionalen Ansteuerung der Treibereinrichtungen und/oder Diagnose verwendet werden.

Vorzugsweise erfolgt die Übertragung der Daten zwischen der wenigstens einen Steuereinrichtung und den Treibereinrichtungen.

Ein weiterer Vorteil der LED-Spannungsversorgung besteht darin, dass weitere elektronische Steuergeräte im Kraftfahrzeug, die nicht direkt mit der Nennspannung der Starterbatterie versorgbar sind, ebenfalls versorgt werden können. Bevorzugt ist daher wenigstens ein Ausgang zum Anschließen wenigstens einer elektronischen Steuereinheit, insbesondere eines Mikrocontrollers, an die LED-Spannungsversorgung vorgesehen.

Weiterer Gegenstand der Erfindung ist ein Bordnetz-System, mit dem vorstehend erläuterten LED-Bordnetz und mit mehreren Kfz-Leuchten, die jeweils an eine eigene Treibereinrichtung des LED-Bordnetzes angeschlossen sind.

Weiterer Gegenstand der Erfindung ist ein Kraftfahrzeug, mit dem vorstehend erläuterten Bordnetz-System.

Bevorzugt sind alle Kfz-Leuchten des Kraftfahrzeugs an eine einzige LED-Spannungsversorgung angeschlossen, d.h. es kann lediglich eine einzige, zentrale LED-Spannungsversorgung vorgesehen sein.

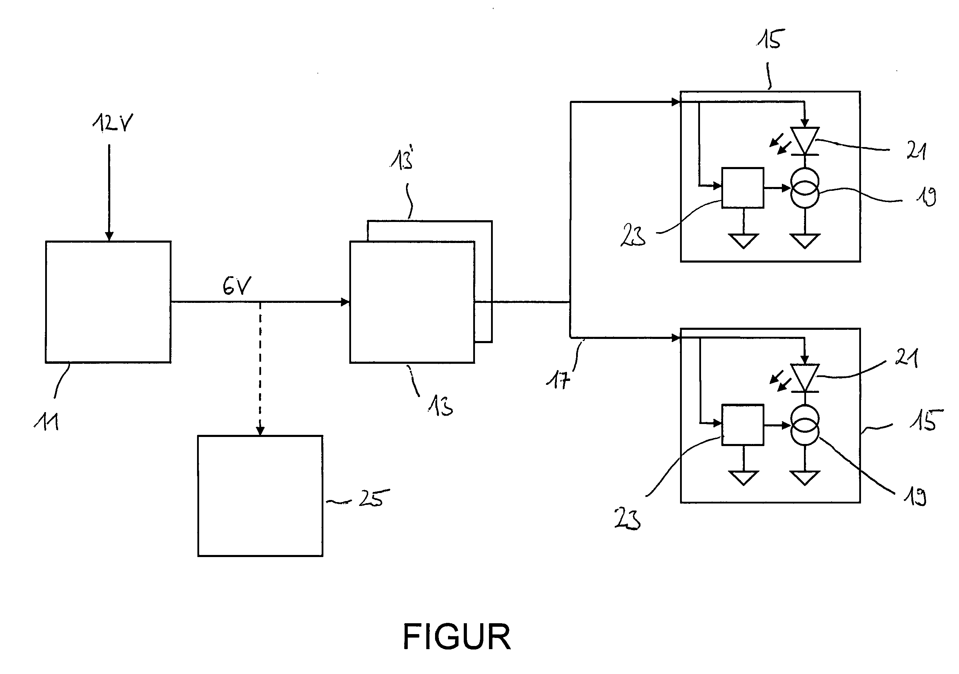

Weitere vorteilhafte Ausführungsformen der Erfindung sind in den Unteransprüchen, der Beschreibung und der Zeichnung angegeben.

Die Erfindung wird im Folgenden beispielhaft unter Bezugnahme auf die einzige Figur der Zeichnung beschrieben.

Die Figur zeigt, in schematischer Darstellung, ein erfindungsgemäßes Bordnetz-System.

Das erfindungsgemäße LED-Bordnetz-System eines Kraftfahrzeugs umfasst einen Abwärtsschaltregler 11, der an eine nicht dargestellte Starterbatterie mit einer Betriebsspannung von 12V angeschlossen ist. Der Schaltregler 11 ist dazu ausgebildet, an seinem Ausgang eine niedrigere Spannung zu erzeugen, als an seinem Eingang anliegt. In dem Beispiel der beschriebenen Figur wird eine Nennspannung von 6V erzeugt. Der Schaltregler 11 stellt eine LED-Spannungsversorgung dar.

Die Nennspannung von 6V des Schaltreglers 11 liegt an einem Steuerbaustein 13 (Master) an, der über Versorgungsleitungen 17 für die Nennspannung von 6V zwei LED-Treiberbausteine 15 (Slave) ansteuert. Grundsätzlich können auch mehr als zwei LED-Treiberbausteine 15 von dem Steuerbaustein 13 ansteuerbar sein. Darüber hinaus können auch mehrere Steuerbausteine 13 vorgesehen sein, wie durch den Steuerbaustein mit dem Bezugszeichen 13' angedeutet ist, die jeweils mehrere LED-Treiberbausteine 15 ansteuern. Über die Versorgungsleitungen 17 können Datenprotokolle zwischen dem Steuerbaustein 13 und den Treibereinrichtungen 15 ausgetauscht werden, die zur bi-direktionalen Ansteuerung und/oder Diagnose verwendet werden.

Die LED-Steuerbausteine 15, die jeweils eine eigene Leuchtdiode (LED) 21 ansteuern, umfassen jeweils eine von einem Pulsweitenmodulator (PWM) 23 steuerbare Stromquelle 19, beispielsweise einen steuerbaren Schalttransistor, so dass eine Helligkeitsregelung der jeweils zugeordneten LED 21 ermöglicht ist. Der jeweilige PWM 23 ist in dem Beispiel der beschriebenen Figur parallel zu der jeweiligen LED 21 geschaltet. Grundsätzlich ist es jedoch auch möglich, dass der jeweilige PWM 23 in Reihe zu der jeweiligen LED 21 geschaltet ist.

Die LEDs 21 gehören jeweils zu einer Kfz-Leuchte. Die Kfz-Leuchten sind daher jeweils an einem eigenen LED-Steuerbaustein 15 und über den jeweiligen LED-Steuerbausteine 15 an dem gemeinsamen Schaltregler 11 angeschlossen, d.h. an einer gemeinsamen LED-Spannungsversorgung.

Darüber hinaus ist ein mit der Spannung von 6V betreibbarer Mikrocontroller 25 gezeigt, der ebenfalls an das LED-Bordnetz, wie es vorstehend erläutert ist, angeschlossen ist.

Durch das erfindungsgemäße LED-Bordnetz kann auf den Einsatz von vielen einzelnen Spannungswandler verzichtet werden.

### Bezugszeichenliste

- 11: Abwärtsschaltregler
- 13: Steuerbaustein
- 15: Treiberbaustein
- 17: Versorgungsleitung
- 19: steuerbare Stromquelle
- 21: LED
- 23: Pulsweitenmodulator
- 25: Mikrocontroller

## Patentansprüche

1. LED-Bordnetz zum Betrieb von Kfz-Leuchten mit Leuchtdioden (21), mit wenigstens einer LED-Spannungsversorgung (11), deren Nennspannung von der Nennspannung einer Starterbatterie eines Kraftfahrzeugs, insbesondere von 12V und/oder 24V, verschieden ist, und mit wenigstens zwei Treibereinrichtungen (15), die über Versorgungsleitungen (17) mit der LED-Spannungsversorgung (11) verbunden und jeweils zum Ansteuern einer eigenen Kfz-Leuchte ausgebildet sind.

2. LED-Bordnetz nach Anspruch 1,
**dadurch gekennzeichnet,**
**dass** die Nennspannung der LED-Spannungsversorgung (11) kleiner ist als die Nennspannung einer Starterbatterie eines Kraftfahrzeugs.

3. LED-Bordnetz nach Anspruch 1 oder 2,
**dadurch gekennzeichnet,**
**dass** die LED-Spannungsversorgung (11) als ein Spannungswandler, insbesondere ein Schaltregler und/oder ein Abwärtswandler, ausgebildet ist, der einen Eingang zum Anschließen an eine Starterbatterie eines Kraftfahrzeugs umfasst.

4. LED-Bordnetz nach einem der vorstehenden Ansprüche,
**dadurch gekennzeichnet,**
**dass** wenigstens eine Steuereinrichtung (13, 13') zur Ansteuerung der Treibereinrichtungen (15) vorgesehen ist.

5. LED-Bordnetz nach einem der vorstehenden Ansprüche,
**dadurch gekennzeichnet,**
**dass** das LED-Bordnetz zur Übertragung von Daten auf den Versorgungsleitungen (17) ausgelegt ist.

6. LED-Bordnetz nach den Ansprüchen 4 und 5,
**dadurch gekennzeichnet,**
**dass** die Übertragung der Daten zwischen der wenigstens einen Steuereinrichtung (13) und den Treibereinrichtungen (15) erfolgt.

7. LED-Bordnetz nach einem der vorstehenden Ansprüche,
**dadurch gekennzeichnet,**
**dass** wenigstens ein Ausgang zum Anschließen wenigstens einer elektronischen Steuereinheit (25), insbesondere eines Mikrocontrollers, an die LED-Spannungsversorgung (11) vorgesehen ist.

8. Bordnetz-System, mit dem LED-Bordnetz gemäß einem der vorstehenden Ansprüche und mit mehreren Kfz-Leuchten, die jeweils an eine eigene Treibereinrichtung (15) des LED-Bordnetzes angeschlossen sind.

9. Kraftfahrzeug, mit dem Bordnetz-System gemäß Anspruch 8.

10. Kraftfahrzeug nach Anspruch 9,
**dadurch gekennzeichnet,**
**dass** alle Kfz-Leuchten des Kraftfahrzeugs an eine einzige LED-Spannungsversorgung (11) angeschlossen sind.
